# FASCICULE DE BREVET EUROPEEN

(11) **EP 0 817 346 B1**
(45) Date de publication et mention de la délivrance du brevet: **27.03.2002**
(21) Numéro de dépôt: 97401477.1
(22) Date de dépôt: 25.06.1997
(51) Int. Cl.: H02H 7/04, H02H 3/16, H01H 71/12

(54) **Dispositif de protection contre les effets des défauts internes d'un appareil électrique**
Schutzvorrichtung gegen die Folgen von internen Fehlern in einem elektrischen Gerät
Protection device against the effects of internal faults in an electrical apparatus

(30) Priorité: 02.07.1996 FR 9608223
(43) Date de publication de la demande: 07.01.1998
(73) Titulaire: Société Nouvelle Transfix, 46000 Cahors (FR)
(72) Inventeur: Aufray,Michel, 83100 Toulon (FR)
(74) Mandataire: Keib, Gérard

(56) Documents cités:
- FR-A- 1 226 418
- FR-A- 2 441 938
- GB-A- 270 456

## Description

L'invention concerne un dispositif de protection contre les effets des défauts internes d'un appareil électrique qui est destiné à être immergé dans un liquide diélectrique contenu dans une cuve et étant de type polyphasé, la cuve étant reliée à la terre et à un potentiel de référence de la partie active de l'appareil.

L'invention s'applique plus particulièrement à des transformateurs moyenne tension/basse tension.

Le dispositif selon l'invention peut cependant s'appliquer à des appareils de fonctions et de types différents.

Dans ce qui suit, pour fixer les idées, sans que cela limite en quoi que ce soit la portée de l'invention, on supposera que l'appareil électrique est un transformateur moyenne tension immergé dans un diélectrique liquide dont l'enroulement primaire est couplé en triangle ou en étoile et est alimenté par un réseau triphasé à neutre non distribué.

On connaît les avantages qu'offrent les fusibles dans le cas d'une avarie du transformateur qu'ils protègent : ils interrompent le courant de défaut et limitent l'énergie dissipée dans le transformateur du fait de l'avarie. En effet, ce courant pourrait être très important compte tenu des puissances disponibles dans les réseaux électriques.

Il est connu par ailleurs que les risques de manifestation extérieure des transformateurs, telle que déchirure de cuve, voire explosion, sont liés à l'apparition d'une surpression interne engendrée par la décomposition du diélectrique liquide sous les effets de l'arc électrique. Ces effets sont donc directement liés à l'énergie libérée durant le défaut.

Cependant, cette protection ne permet généralement pas d'assurer l'isolement du transformateur en exploitation dans deux cas particuliers :
- un défaut interne qui dégénère en défaut polyphasé ; dans ce cas, la protection de l'appareil par fusibles assure la coupure des courants de défaut mais ne permet pas d'isoler complètement la partie active du réseau, au moins un fusible restant passant.

En effet, selon le degré d'altération de l'isolation générale du transformateur, un courant résiduel s'établit entre la phase, dont le fusible est intact, et la terre, à laquelle est reliée la masse du transformateur.

Ce courant résiduel, dont la valeur peut d'ailleurs être inférieure au courant de service normal du transformateur, est en général insuffisant pour provoquer la fusion du fusible par lequel il transite.

Par contre, il est généralement suffisamment important pour provoquer le fonctionnement des protections sensibles aux défauts entre phase et terre de faible intensité, et situé dans le poste source alimentant le réseau dont dépend le transformateur.
- Un défaut interne qui dégénère en défaut phase/terre. En effet, suivant la qualité de la résistance de terre et la nature du régime de neutre du réseau moyenne tension, on peut se trouver en présence d'un courant de terre plus ou moins important entre la terre et la partie active. Cependant, ce courant reste souvent inférieur au courant de fusion du fusible sollicité qui ne détecte donc pas le défaut phase/terre. Et même si il est détecté, cela implique un temps de coupure du fusible supérieur au temps de réponse de la protection contre les défauts à la terre du poste source alimentant l'appareil.

Bien que les deux cas cités précédemment ne correspondent généralement pas à un risque de manifestation extérieure pour le transformateur, ils présentent l'inconvénient de provoquer la mise hors tension du réseau d'alimentation. La perturbation de la distribution de l'énergie électrique s'étend alors non seulement à la clientèle reliée au transformateur avarié, mais également à celle dépendant de tous les transformateurs sains alimentés par le même réseau moyenne tension.

Un troisième type de défaut est généralement difficilement éliminé par une protection réalisée à partir de fusibles moyenne tension : il s'agit de défauts prenant naissance dans un des enroulements basse tension et correspondant par exemple à un court-circuit partiel de cet enroulement. L'intensité du défaut, reportée au niveau de l'enroulement primaire correspondant, est alors limitée par l'impédance de fuite du transformateur. Le courant traversant les fusibles qui alimentent la colonne du transformateur en défaut est généralement insuffisant pour être détecté et éliminé dans un délai suffisamment court. Il s'en suit un risque de manifestation extérieure pour l'appareil qui n'est pas négligeable. Il est à noter qu'un tel défaut prenant son origine dans un enroulement basse tension évolue fréquemment vers un défaut diélectrique entre l'enroulement basse tension et la masse de la partie active.

La présente invention a donc pour but de palier les inconvénients précédemment mentionnés.

A cet effet, l'invention a pour objet un dispositif de protection d'un appareil électrique permettant de s'affranchir des défauts internes et plus particulièrement des défauts se traduisant par un courant s'écoulant à la terre.

A cet effet, on prévoit des moyens de détection qui sont sensibles à un courant de terre d'intensité relativement faible ainsi qu'un système de déconnexion qui permet de déconnecter et donc d'isoler galvaniquement toutes les phases du transformateur quel que soit le défaut détecté.

L'invention propose donc un dispositif de protection contre des effets des défauts internes d'un appareil électrique, notamment d'un transformateur de distribution, ledit appareil électrique étant destiné à être immergé dans un liquide diélectrique contenu dans une cuve et étant du type polyphasé, la cuve étant reliée à la terre et à un potentiel de référence de la partie active du dispositif.

Ce dispositif est caractérisé en ce qu'il comprend:
- un système de déconnexion desdites phases comportant un système de blocage en position connectée,
- un moyen de détection d'un courant de terre circulant entre la partie active et la terre ;
le moyen de détection du courant de terre commandant le système de blocage lorsqu'un courant de terre est détecté de sorte que le système de déconnexion est placé en position déconnectée.

On peut bien entendu prévoir que le système de déconnexion, le système de blocage et le moyen de détection sont disposés à l'intérieur de l'appareil électrique.

Suivant un mode de réalisation :
- le système de déconnexion comporte des moyens de déconnexion branchés en série respectivement avec chaque phase ;
- le système de blocage comporte des premiers moyens de blocage couplés respectivement aux moyens de déconnexion ; et
- le moyen de détection comporte un deuxième moyen de blocage couplé aux premiers moyens de blocage.

Notamment, le couplage entre les premiers et deuxième moyens de blocage est un couplage mécanique.

Suivant un mode de réalisation, chaque premier moyen de blocage comporte :
- un contact relié par une de ses extrémités à l'alimentation de l'appareil et apte à être placé dans deux positions, à savoir une position bloquée dans laquelle le contact assure une liaison électrique entre l'alimentation de la phase respective et la partie active et une position débloquée dans laquelle ladite liaison électrique est ouverte ;
- un moyen mécanique commandé par les moyens de détection et ayant pour fonction de faire passer le contact de la position bloquée à la position débloquée lorsqu'un courant de terre est détecté;
- des moyens de maintien du contact en position bloquée lorsqu'il n'y a pas de détection de courant de terre.

Le contact peut être une tige, la liaison électrique étant obtenue par l'intermédiaire de deux lames conductrices souples fixées par une de leurs extrémités à la partie conductrice de l'appareil en étant en regard l'une de l'autre de manière à définir un espace dans lequel vient se loger, en position bloquée, l'extrémité libre de la tige, cette dernière étant en contact avec les deux lames conductrices. Cela peut être tout autre élément mécanique, électromécanique, pneumatique ou thermique permettant d'obtenir un tel contact.

Les moyens de maintien peuvent comporter un ressort d'éjection monté sur l'extrémité du contact reliée à l'alimentation de la partie active de l'appareil, le ressort d'éjection étant comprimé lorsque le contact est en position bloquée.

Pour permettre le passage de la position bloquée à la position débloquée des premiers moyens de blocage, la tige comporte une encoche de blocage et le moyen mécanique comporte une lame ressort s'étendant sensiblement perpendiculairement à la tige et dont une première extrémité est destinée à être logée dans l'encoche de la tige en position bloquée, l'autre extrémité présentant une courbe à concavité tournée vers la liaison électrique et adaptée à recevoir de manière fixe une pièce formant gâchette montée à rotation autour d'un axe de rotation suivant deux positions, à savoir une position fermée dans laquelle la première extrémité de la lame ressort est logée dans l'encoche du contact et une position ouverte dans laquelle la première extrémité est sortie de ladite encoche.

Pour provoquer le déblocage des moyens de déconnexion de chacune des phases simultanément, l'axe de rotation est commun aux pièces formant gâchette de chacun des premiers moyens de blocage.

Ainsi, les pièces formant gâchette de chacun des moyens de blocage sont maintenues solidaires en rotation au moyen d'une liaison mécanique.

Suivant un mode de réalisation, les moyens de détection comportent un élément de détection, relié mécaniquement au deuxième moyen de blocage et connecté électriquement entre la cuve et la masse de la partie active de l'appareil.

Dans ce cas, le deuxième moyen de blocage du deuxième moyen de déconnexion comporte un moyen mécanique destiné à commander une pièce formant gâchette montée à rotation autour d'un axe de rotation suivant deux positions, à savoir une position fermée correspondant à la position connectée des moyens de connexion et une position ouverte correspondant à la position déconnectée des moyens de connexion.

Pour que le deuxième moyen de blocage commande les premiers moyens de blocage, l'axe de rotation est commun aux pièces formant gâchette des premiers et deuxième moyens de blocage.

Ainsi, les pièces formant gâchette de chacun des moyens de déconnexion sont solidaires en rotation au moyen d'une liaison mécanique.

Bien entendu on peut prévoir que les moyens de déconnexion comportent respectivement un élément de sécurité qui est monté entre une borne reliée à la phase du réseau d'alimentation moyenne tension et le premier moyen de blocage respectif.

Suivant un mode de réalisation, l'élément de détection comporte un fusible à percuteur, le percuteur du fusible jouant le rôle du moyen mécanique et étant apte à faire passer la pièce formant gâchette de la position fermée à la position ouverte.

Ces éléments de sécurité peuvent comporter par exemple un fusible à percuteur, le percuteur étant apte à faire passer la pièce formant gâchette du premier moyen de blocage respectif de la position fermée à la position ouverte.

Pour obtenir une conservation du diélectrique autour des premiers moyens de déconnexion dans le cas d'une baisse de niveau du diélectrique dans la cuve due par exemple à une fuite et pour permettre ainsi de maintenir l'intégralité de l'isolation, les premiers moyens de déconnexion sont montés dans un boîtier isolant et étanche en amont du dispositif selon l'invention.

Enfin, l'invention concerne un transformateur de distribution d'énergie électrique moyenne tension destiné à être immergé dans un liquide diélectrique contenu dans une cuve et étant de type polyphasé, comportant un dispositif de protection selon l'invention.

L'invention sera mieux comprise et d'autres caractéristiques et avantages apparaîtront à la lecture de la description qui suit en regard des figures annexées et selon lesquelles :
- la figure 1 est une représentation schématique d'un transformateur comportant un dispositif selon l'invention ;
- la figure 2 est une représentation schématique d'un premier moyen de blocage du dispositif selon l'invention ;
- la figure 3 est une représentation schématique d'un deuxième moyen de blocage du dispositif selon l'invention ;
- la figure 4 est une représentation schématique du dispositif selon l'invention ;
- et la figure 5 est une représentation schématique du boîtier isolant et étanche.

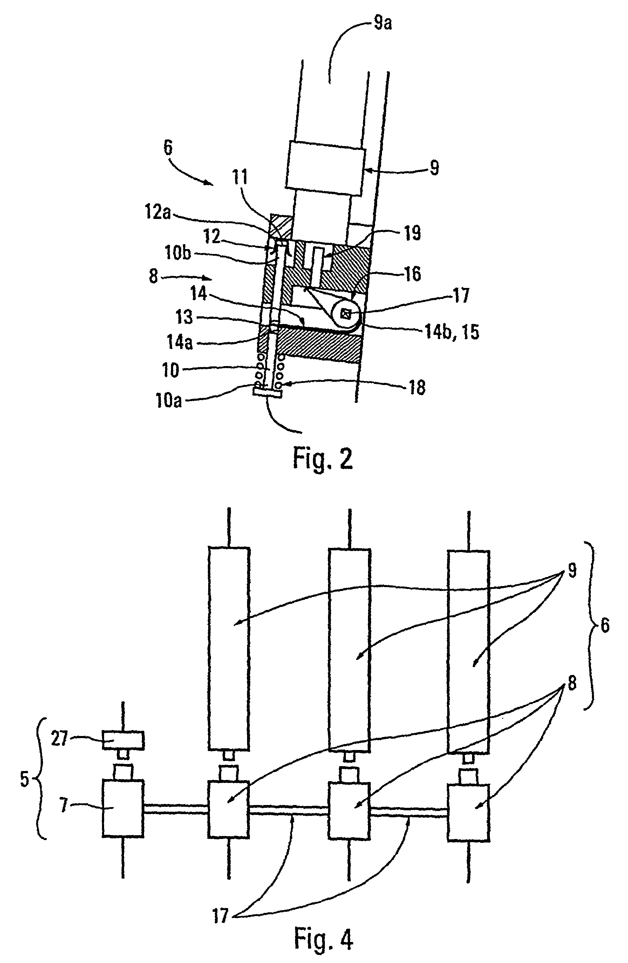

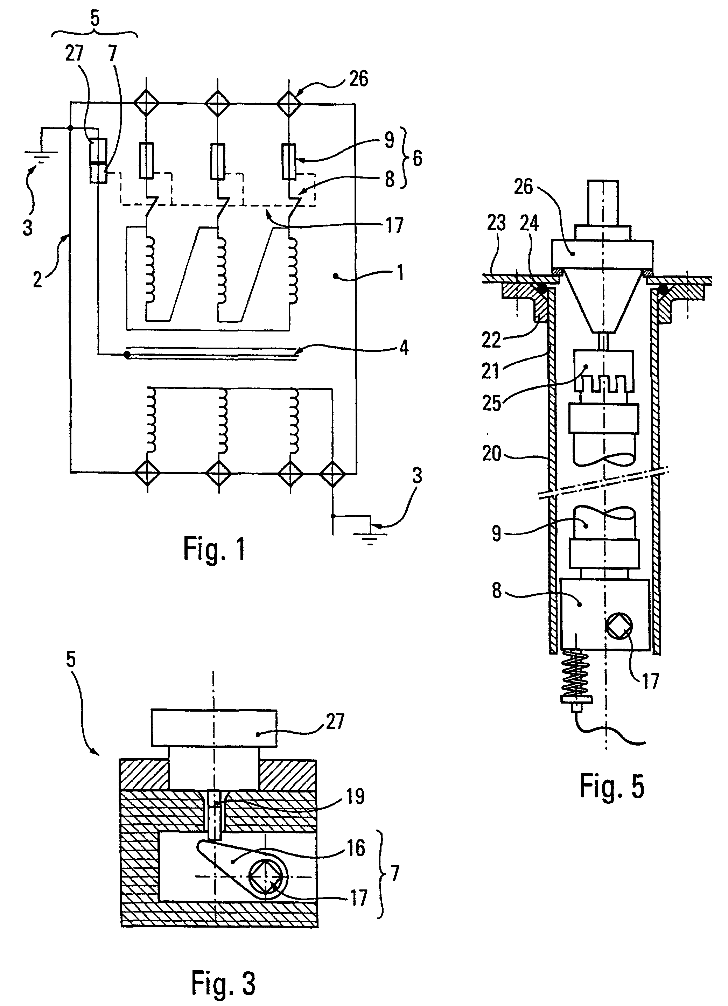

Comme illustré sur la figure 1, le transformateur 1 ou plus généralement l'appareil électrique à protéger est immergé dans un liquide diélectrique contenu dans une cuve 2.

Dans l'exemple de réalisation représenté, ce transformateur 1 est du type triphasé, la cuve étant reliée à la terre 3 et à une masse de la partie active 4 de l'appareil.

Le dispositif de protection du transformateur 1 comporte un moyen de détection 5 (voir figure 1) du courant de terre circulant entre la terre et la masse de la partie active 4.

Ce moyen de détection est destiné à provoquer la déconnexion des phases du transformateur lorsqu'un courant de terre, à savoir entre partie active 4 et terre 3, est détecté.

A cet effet, le dispositif de protection selon l'invention comporte un système de déconnexion des phases du transformateur 1 comportant des moyens de déconnexion 6 branchés en série respectivement avec les phases alimentant le transformateur 1.

Ces moyens de déconnexion 6 comportent respectivement des premiers moyens de blocage 8 couplés aux moyens de connexion et verrouillant les moyens de déconnexion 6 en position connectée.

En outre, le moyen de détection 5 comporte un deuxième moyen de blocage 7 couplé aux premiers moyens de blocage 8.

Ainsi, le moyen de détection du courant de terre commande, par le deuxième moyen de blocage, les premiers moyens de blocage 8 lorsqu'un courant de terre est détecté de sorte que les moyens de déconnexion sont placés en position déconnectée.

Les premiers moyens de blocage 8 de chaque moyen de déconnexion 6 étant couplés entre eux, on obtient une déconnexion simultanée de toutes les phases du transformateur 1.

En particulier, le moyen de détection 5 est couplé mécaniquement au deuxième moyen de blocage 7, qui commande les premiers moyens de blocage 8 des premiers moyens de déconnexion 6.

D'après la figure 1, les moyens de déconnexion 6, les premiers 8 et deuxième 7 moyens de blocage et le moyen de détection 5 sont disposés à l'intérieur de la cuve 2.

Suivant le mode de réalisation représenté, chaque moyen de déconnexion 6 comportent respectivement un élément de sécurité et de détection 9 qui est connecté entre la phase alimentant le transformateur 1 et le premier moyen de blocage 8 respectif.

Dans l'exemple choisi, les éléments de sécurité et de détection 9 sont des fusibles équipés de percuteurs reliés à chaque phase et disposés dans la cuve 2. Cependant, on pourrait prévoir d'autres types d'élément de sécurité.

Suivant un mode de réalisation représenté à la figure 2, chaque premier moyen de blocage 8 comporte un contact 10 relié par une de ses extrémités 10a à l'alimentation de la phase correspondante de la partie active 4.

Ce contact 10 est par exemple constitué d'une tige s'étendant sensiblement parallèlement à l'axe longitudinal 9a du fusible 9.

Lorsque les moyens de déconnexion 6 sont en position connectée, l'autre extrémité 10b de la tige 10 est logée dans un espace 11 délimité par deux lames conductrices 12 souples fixées par une de leurs extrémités 12a à l'aval du fusible 9.

Ces deux lames 12 sont en regard l'une de l'autre, et en contact avec l'extrémité 10b de la tige 10.

La tige 10 comporte une encoche de blocage 13 et le premier moyen de blocage 8 comporte en outre une lame ressort 14 s'étendant sensiblement perpendiculairement à l'axe longitudinal 9a du fusible 9.

En position connectée, une première extrémité 14a de la lame 14 est logée dans l'encoche 13, l'autre extrémité 14b de la lame 14 présentant une courbe 15 à concavité tournée vers le fusible 9.

Dans cette courbe 15 est disposée une pièce formant gâchette 16 qui est fixée à demeure à l'extrémité 14b de la lame 14.

Cette pièce formant gâchette 16 est en outre montée à rotation autour d'un axe de rotation 17 suivant deux positions :
- une position fermée dans laquelle la première extrémité 14a de la lame ressort 14 est logée dans l'encoche 13 de la tige 10 ; et
- une position ouverte dans laquelle la première extrémité 14a est sortie de ladite encoche 13.

Chaque premier moyen de blocage 8 comporte enfin un ressort d'éjection 18 monté sur l'extrémité 10a de la tige 10 reliée à l'alimentation de la phase correspondante de la partie active 4, le ressort d'éjection 18 étant comprimé en position connectée et maintenant l'extrémité 10b de la tige 10 dans l'espace 11.

Ainsi la tige 10 est apte à être placé dans deux positions, une position bloquée dans laquelle elle assure une liaison électrique entre l'aval du fusible 9 relié à la phase du réseau d'alimentation et la phase correspondante de la partie active 4 et une position débloquée dans laquelle cette liaison n'est pas réalisée de manière à assurer un isolement suffisant.

Pour faire passer la pièce formant gâchette 16 de la position fermée à la position ouverte, le fusible 9 comporte, par exemple un percuteur 19.

En outre on peut prévoir que l'axe de rotation 17 soit commun aux pièces formant gâchette 16 de chacun des premiers moyens de blocage 8.

Ainsi, lorsqu'un des fusibles détecte un défaut, le percuteur 19 qui lui est associé est déclenché et provoque le déplacement de la pièce formant gâchette 16 de la position fermée à la position ouverte.

En tournant, cette pièce formant gâchette 16 entraîne les autres pièces formant gâchette des autres premiers moyens de blocage 8, par l'intermédiaire de l'axe de rotation 17.

Les lames ressort 14, en s'enroulant autour de la pièce formant gâchette 16, font sortir simultanément les trois tiges 10 de l'espace 11.

On obtient ainsi une isolation galvanique entre la partie active du transformateur et le réseau d'alimentation.

Pour simplifier la fabrication, le deuxième moyen de blocage 7 peut avoir une structure semblable à celle des premiers moyens de blocage 8 décrits précédemment, tels que représentés en figure 3.

Dans ce cas, le premier moyen de blocage 7 comporte un fusible 27 connecté entre la cuve 2 et la masse de la partie active 4, et muni d'un percuteur 19 tel que précédemment décrit.

Cependant on peut prévoir d'autre type de moyens de détection tels que par exemple un système électromagnétique à maximum d'intensité ou un système thermique de type bilame ou pyrotechnique.

Ce fusible 27 joue alors le rôle de moyen de détection et provoque au travers du percuteur 19 la rotation de la gâchette 16.

Bien entendu, le deuxième moyen de blocage 7 ne comporte pas de tige 10 puisqu'en cas de courant de défaut à la terre, il n'est pas nécessaire de couper la liaison entre la terre 3 et la masse de la partie active 4 mais surtout la liaison de chacune des phases du transformateur 1.

En effet l'intérêt de cette structure pour le deuxième moyen de blocage 7 réside dans le fait qu'il peut être couplé mécaniquement aux premiers moyens de blocage 8, par l'intermédiaire de l'axe de rotation 17 de sorte que lorsque le fusible 27 détecte un courant de terre entre la terre 3 et la masse de la partie active 4, le deuxième moyens de blocage 7 passe en position débloquée, commande la rotation des gâchettes 16 des premiers moyens de blocage 8 par l'intermédiaire de l'axe 17 et fait passer simultanément les moyens de déconnexion 6 en position déconnectée.

Suivant un autre mode de réalisation, tel que représenté à la figure 5, les moyens de déconnexion 6, incluant les fusibles 9 et les premiers moyens de blocage 8, sont montés respectivement dans un boîtier 20 isolant et étanche dans sa partie supérieure 21.

En effet, l'étanchéité des boîtiers 20 permet la conservation du diélectrique autour du fusible dans le cas d'une baisse de niveau dans la cuve 2 due par exemple à une fuite.

Les boîtiers 20 ont ainsi pour fonction de maintenir l'intégralité de l'isolation.

Selon un mode de réalisation, les boîtiers 20 sont constitués d'un tube isolant sur la partie supérieure 21 duquel une bride 22 assure le maintien mécanique du boîtier sous un couvercle 23.

L'étanchéité entre le boîtier 20 et le couvercle 23 est réalisé, par exemple, par un joint torique 24.

Un contact 25, par exemple de type "tulipe", assure la liaison entre l'amont du fusible et la traversée haute tension 26 du transformateur.

## Revendications

1. Dispositif de protection contre des effets des défauts internes d'un appareil électrique, notamment d'un transformateur de distribution (1), ledit appareil électrique étant destiné à être immergé dans un liquide diélectrique contenu dans une cuve (2) et étant du type polyphasé, la cuve (2) étant reliée à la terre (3) et à une masse de la partie active (4) de l'appareil,
**caractérisé en ce qu'**il comprend :
- un système de déconnexion desdites phases comportant un système de blocage en position connectée,
- un moyen de détection (5) relié entre la cuve et la partie active pour détecter un courant de terre circulant entre la terre et la masse de la partie active (4) de l'appareil ;
le moyen de détection (5) du courant de terre commandant le système de blocage lorsqu'un courant de terre est détecté de sorte que le système de déconnexion est placé en position déconnectée.

2. Dispositif selon la revendication 1, **caractérisé en ce que** le système de déconnexion, le système de blocage et le moyen de détection (5) sont disposés à l'intérieur de l'appareil électrique.

3. Dispositif selon la revendication 1 ou 2, **caractérisé en ce que** :
- le système de déconnexion comporte des moyens de déconnexion (6) branchés en série respectivement avec chaque phase ;
- le système de blocage comporte des premiers moyens de blocage (8) couplés respectivement aux moyens de déconnexion (6) ; et
- le moyen de détection (5) comporte un deuxième moyen de blocage (7) couplé aux premiers moyens de blocage (8).

4. Dispositif selon la revendication 3, **caractérisé en ce que** le couplage entre les premiers et le deuxième moyens de blocage est un couplage mécanique.

5. Dispositif selon la revendication 4, **caractérisé en ce que** chaque premier moyen de blocage comporte :
- un contact relié par une de ses extrémités à l'alimentation de l'appareil et apte à être placé dans deux positions, à savoir une position bloquée dans laquelle le contact assure une liaison électrique entre l'alimentation de la phase respective et la partie active (4) et une position débloquée dans laquelle ladite liaison électrique est ouverte ;
- un moyen mécanique (14, 16) commandé par les moyens de détection et ayant pour fonction de faire passer le contact de la position bloquée à la position débloquée lorsqu'un courant de terre est détecté;
- des moyens de maintien du contact en position bloquée lorsqu'il n'y a pas de détection de courant de terre.

6. Dispositif selon la revendication 5, **caractérisé en ce que** le contact est une tige (10), la liaison électrique étant obtenue par l'intermédiaire de deux lames conductrices souples couplées par une de leurs extrémités à la phase de l'appareil en étant en regard l'une de l'autre de manière à définir un espace dans lequel vient se loger, en position bloquée, l'extrémité libre de la tige (10), cette dernière étant en contact avec les deux lames conductrices.

7. Dispositif selon la revendication 5 ou 6, **caractérisé en ce que** les moyens de maintien comportent un ressort d'éjection (18) monté sur l'extrémité du contact reliée à l'alimentation de la partie active (4) de l'appareil, le ressort d'éjection (18) étant comprimé lorsque le contact est en position bloquée.

8. Dispositif selon l'une quelconque des revendications 6 et 7, **caractérisé en ce que** la tige (10) comporte une encoche (13) de blocage et le moyen mécanique (14, 16) comporte une lame ressort (14) s'étendant sensiblement perpendiculairement à la tige (10) et dont une première extrémité est destinée à être logée dans l'encoche (13) de la tige (10) en position bloquée, l'autre extrémité présentant une courbe à concavité tournée vers la liaison électrique et adaptée à recevoir de manière fixe une pièce formant gâchette (16) montée à rotation autour d'un axe de rotation (17) suivant deux positions, à savoir une position fermée dans laquelle la première extrémité de la lame ressort (14) est logée dans l'encoche (13) du contact et une position ouverte dans laquelle la première extrémité est sortie de ladite encoche (13).

9. Dispositif selon la revendication 8, **caractérisé en ce que** l'axe de rotation (17) est commun aux pièces formant gâchette (16) de chacun de premiers moyens de blocage (8).

10. Dispositif selon la revendication 3 ou 4, **caractérisé en ce que** les moyens de détection comportent un élément de détection, tel qu'un fusible (27) ou analogue, relié mécaniquement au deuxième moyen de déconnexion et connecté électriquement entre la cuve (2) et la masse de la partie active (4) de l'appareil.

11. Dispositif selon la revendication 10, **caractérisé en ce que** le deuxième moyen de blocage (7) comporte un moyen mécanique (19) destinée à commander une pièce formant gâchette (16) montée à rotation autour d'un axe de rotation (17) suivant deux positions, à savoir une position fermée correspondant à la position connectée des moyens de connexion et une position ouverte correspondant à la position déconnectée des moyens de connexion.

12. Dispositif selon l'une quelconque des revendications 8 à 11, **caractérisé en ce que** l'axe de rotation (17) est commun aux pièces formant gâchette (16) de chacun des premiers et deuxième moyens de blocage, le deuxième moyen de blocage (7) commandant les premiers moyens de blocage (8) lorsque le courant de terre est détecté.

13. Dispositif selon l'une quelconque des revendications 10 à 12, **caractérisé en ce que** l'élément de détection comporte un fusible (27) à percuteur (19), le percuteur (19) du fusible (27) étant apte à faire passer la pièce formant gâchette (16) de la position fermée à la position ouverte.

14. Dispositif selon l'une quelconque des revendications 3 à 13, **caractérisé en ce que** les moyens de déconnexion (6) comportent respectivement un élément de sécurité (9) qui est monté entre une phase et le premier moyen de blocage respectif, et qui a pour fonction de protéger l'appareil électrique contre un défaut polyphasé.

15. Dispositif selon la revendication 14, **caractérisé en ce que** chacun desdits éléments de sécurité comporte un fusible (9) à percuteur (19), le percuteur (19) étant apte à faire passer la pièce formant gâchette (16) du premier moyen de blocage respectif de la position fermée à la position ouverte.

16. Dispositif selon l'une quelconque des revendications 3 à 18, **caractérisé en ce que** les moyens de déconnexion (6) sont montés dans un boîtier (20) isolant et étanche dans sa partie supérieure (21), le boîtier (20) ayant pour fonction de maintenir l'isolation des moyens de déconnexion (6).

17. Dispositif selon l'une quelconque des revendications 1 à 6 **caractérisé en ce que** l'appareil électrique est un transformateur de distribution d'énergie électrique moyenne tension.

## Claims

1. Device for [providing] protection against the effects of internal failures in an electrical apparatus, especially a distribution transformer (1), said apparatus being intended for submersion in a dielectric liquid held in a cell (2) and being a multi-phase apparatus, wherein the cell (2) is connected to earth (3) and to the carcase of the active part (4) of the apparatus, **characterised in that** it [the device] comprises
- a disconnection system for said phases, having a blocking arrangement that is in the connected position [by default], and
- detecting means (5) connected between the cell and the active part for detecting an earth current flowing between earth and the carcase of the active part (4) of the apparatus,
wherein the earth current detecting means (5), when an earth current is detected, controls the blocking arrangement so as to put the disconnection system into the disconnected condition.

2. Device according to Claim 1, **characterised in that** the disconnection system, the blocking arrangement and the detecting means (5) are disposed inside the electrical apparatus.

3. Device according to Claim 1 or 2, **characterised in that**:
- the disconnection system comprises, for each phase, respective disconnecting means (6) connected in series with said phase,
- the blocking arrangement comprises first blocking means (8) coupled respectively to the disconnecting means (6), and
- the detecting means (5) comprises a second blocking arrangement (7) coupled to the first blocking means (8).

4. Device according to Claim 3, **characterised in that** the coupling between the first and the second blocking means is mechanical.

5. Device according to Claim 4, **characterised in that** each first blocking means comprises:
- a contact connected by one of its ends to the feed line [or input] of the apparatus and adapted to be switched between two positions, viz. a blocked position in which the contact effects an electrical connection between the feed line [or input] of the respective phase and the active part (4), and an unblocked position in which said electrical connection is broken;
- mechanical means (14, 16) controlled by the detecting means and having the function of moving the contact, upon detection of an earth current, from the blocked to the unblocked position; and
- means for holding the contact in the blocked position so long as no earth current is detected.

6. Device according to Claim 5, **characterised in that** the contact is a rod (10), the electrical connection being obtained by way of two pliant conductive blades, each coupled at one of its ends to the phase of the apparatus, and facing one another so as to define a space in which the free end of the rod (10) comes to lodge in contact with the two conductive blades.

7. Device according to Claim 5 or 6, **characterised in that** the holding means comprise an ejection spring (18) mounted on the end of the contact connected to the feed line of the active part (4) of the apparatus, the ejection spring (18) being compressed so long as the contact is in the blocked position.

8. Device according to Claim 6 or 7, **characterised in that** the rod (10) bears a blocking notch (13) and the mechanical means (14, 16) comprises a spring blade (14) extending substantially perpendicularly of the rod (10), one end of which blade is intended for lodgement in the notch (13) of the rod (10) in the blocked position [thereof], the other end being concavely curved towards the electrical connection and adapted to receive and hold a piece which forms a spring catch (16) mounted for rotation about a spindle (17) between two positions, viz. a closed position in which the first end of the spring blade (4) is lodged in the notch (13) of the contact, and an open position in which said first end is clear of said notch (13).

9. Device according to Claim 8, **characterised in that** the spindle (17) is common to the pieces which form the spring catch (16) of each of the first blocking means (8).

10. Device according to Claim 3 or 4, **characterised in that** the detecting means comprise a detecting element such as a fuse (27) or the like, mechanically coupled to the second disconnection means and electrically connected between the cell (2) and the carcase of the active part (4) of the apparatus.

11. Device according to Claim 10, **characterised in that** the second blocking means (7) comprise a mechanical means (19) intended for controlling a piece which forms a spring catch (16) mounted for rotation on a spindle (17) between two positions, viz. a closed position corresponding to the connected position of the connecting means and an open position corresponding to the disconnected position of the connecting means.

12. Device according to any one of Claims 8 to 11, **characterised in that** the spindle (17) is common to the pieces which form the spring catch (16) of each of the first and second blocking means, the second blocking means (7) controlling the [several] first blocking means (8) whenever the earth current is detected.

13. Device according to any one of Claims 10 to 12, **characterised in that** the detecting element comprises a fuse (27) of the percussion type, the striker (19) of the fuse (27) being adapted for moving the piece that forms the spring catch (16) from the closed position to the open position.

14. Device according to any one of Claims 3 to 13, **characterised in that** the disconnecting means (6) each carry a respective security element (9) which is mounted between a phase and the respective first blocking means, and whose function is to protect the electrical apparatus against a multiphase fault.

15. Device according to Claim 14, **characterised in that** each said security element comprises a percussion fuse (9), the striker (19) being adapted to move the piece that forms a spring catch (16) of the respective blocking means from the closed position to the open position.

16. Device according to any one of Claims 3 to 18 [sic], **characterised in that** the disconnecting means (6) are mounted in the upper part (21) of a sealed insulating case (20) which has the function of keeping said disconnecting means (6) insulated.

17. Device according to any one of Claims 1 to 6, **characterised in that** the electrical apparatus is a medium voltage electrical energy distribution transformer.

## Patentansprüche

1. Schutzvorrichtung gegen die Auswirkung von internen Fehlern eines elektrischen Gerätes, insbesondere eines Verteilertransformators (1), wobei das elektrische Gerät dazu bestimmt ist, in eine dielektrische Flüssigkeit eingetaucht zu werden, die in einem Behälter (2) enthalten und von einer mehrphasigen Art ist, wobei der Behälter (2) mit der Erde (3) und einer Masse des Wirkteils (4) des Gerätes verbunden ist,
**dadurch gekennzeichnet, dass** sie enthält:
- ein Trennsystem der Phasen, das ein Blockiersystem in eingeschalteter Stellung aufweist,
- ein Detektionsmittel (5), das zwischen dem Behälter und dem Wirkteil geschaltet ist, um einen Erdungsstrom zu detektieren, der zwischen der Erde und der Masse des Wirkteils (4) des Gerätes fließt;
wobei das Erdungsstrom-Detektionsmittel (5) das Blockiersystem steuert, wenn ein Erdungsstrom detektiert wird, so dass das Trennsystem in unterbrochener Stellung angeordnet ist.

2. Vorrichtung gemäß Anspruch 1, **dadurch gekennzeichnet, dass** das Trennsystem, das Blokkiersystem und das Detektionsmittel (5) im Inneren des elektrischen Gerätes angeordnet sind.

3. Vorrichtung gemäß Anspruch 1 oder 2, **dadurch gekennzeichnet, dass**:
- das Trennsystem Trennmittel (6) aufweist, die an jede jeweilige Phase in Serie geschaltet sind;
- das Blockiersystem erste Blockiermittel (8) aufweist, die jeweils mit den Trennmitteln (6) verbunden sind; und
- das Detektionsmittel (5) ein zweites Blockiermittel (7) aufweist, das mit den ersten Blokkiermitteln (8) verbunden ist.

4. Vorrichtung gemäß Anspruch 3, **dadurch gekennzeichnet, dass** die Kopplung zwischen den ersten und dem zweiten Blockiermittel(n) eine mechanische Kopplung ist.

5. Vorrichtung gemäß Anspruch 4, **dadurch gekennzeichnet, dass** jedes erste Blockiermittel aufweist:
- einen Kontakt, der durch eins seiner Enden mit der Versorgung des Gerätes verbunden ist und geeignet ist, in zwei Stellungen angeordnet zu werden, und zwar in einer blockierten Stellung, in der der Kontakt eine elektrische Verbindung zwischen der Versorgung der jeweiligen Phase und dem Wirkteil (4) sichert, und in einer entblockten Stellung, in der die elektrische Verbindung ausgeschaltet ist;
- ein mechanisches Mittel (1.4, 16), das durch die Detektionsmittel gesteuert wird, und die Funktion hat, den Kontakt von der blockierten Stellung zu der entblockten Stellung überzuleiten, wenn ein Erdungsstrom detektiert wird;
- Mittel zum Halten des Kontaktes in blockierter Stellung, wenn kein Erdungsstrom detektiert wird.

6. Vorrichtung gemäß Anspruch 5, **dadurch gekennzeichnet, dass** der Kontakt ein Schaft (10) ist, wobei die elektrische Verbindung mittels zwei leitenden, flexiblen Zungen erhalten wird, die durch eines ihrer Enden mit der Phase des Gerätes verbunden sind, wobei eins dem anderen gegenübersteht, so dass ein Raum definiert wird, in dem sich, in blockierter Stellung, das freie Ende des Schaftes (10) einführen wird, wobei der Letztere in Kontakt mit den beiden leitenden Zungen ist.

7. Vorrichtung gemäß Anspruch 5 oder 6, **dadurch gekennzeichnet, dass** die Haltemittel eine Ausstoßfeder (18) aufweisen, die auf dem Kontaktende angebracht ist, das mit der Zuführung des Wirkteils (4) des Gerätes verbunden ist, wobei die Ausstoßfeder (18) zusammengedrückt wird, wenn der Kontakt in blockierter Stellung ist.

8. Vorrichtung gemäß einem der Ansprüche 6 oder 7, dadurch gekermzeichnet, dass der Schaft (10) eine Blockiemut (13) aufweist und das mechanische Mittel (14, 16) ein Federblatt (14) aufweist, das sich merklich senkrecht zu dem Schaft (10) erstreckt und von dem ein erstes Ende bestimmt ist, in die Nut (13) des Schaftes (10) in blockierter Stellung eingeführt zu werden, wobei das andere Ende eine Krümmung mit Aushöhlung aufweist, die zu der elektrischen Verbindung gedreht und angepasst ist, um einen Teil, stillstehend, entgegenzunehmen, der einen Drücker (16) bildet, der zur Drehung um eine Drehachse (17) gemäß zwei Stellungen angebracht ist, und zwar einer geschlossenen Stellung, in der das erste Ende des Federblattes (14) in die Kontaktnut (13) eingeführt wird, und einer offenen Stellung, in der das erste Ende aus der Kerbe (13) herausgelassen wird.

9. Vorrichtung gemäß Anspruch 8, **dadurch gekennzeichnet, dass** die Teile, die die Drücker (16) von jedem der ersten Blockiermittel (8) bilden, die gleiche Drehachse (17) haben.

10. Vorrichtung gemäß Anspruch 3 oder 4, **dadurch gekennzeichnet, dass** die Detektionsmittel ein Detektionselement aufweisen, so dass eine Sicherung (27) oder dergleichen mechanisch mit dem zweiten Trennmittel verbunden und elektrisch zwischen dem Behälter (2) und der Masse des Wirkteils (4) des Gerätes geschaltet ist.

11. Vorrichtung gemäß Anspruch 10, **dadurch gekennzeichnet, dass** das zweite Blockiermittel (7) ein mechanisches Mittel (19) aufweist, das bestimmt ist, einen Teil zu steuern, der einen Drücker (16) bildet, der zur Drehung um eine Drehachse (17) gemäß zwei Stellungen angebracht ist, und zwar einer geschlossenen Stellung, die einer eingeschalteten Stellung der Einschaltungsmittel entspricht, und einer offenen Stellung, die einer ausgeschalteten Stellung der Einschaltungsmittel entspricht.

12. Vorrichtung gemäß einem der Ansprüche 8 bis 11, **dadurch gekennzeichnet, dass** die Teile, die die Drücker (16) von jedem ersten und dem zweiten Blockiermittel(n) bilden, die gleiche Drehachse (17) haben, wobei das zweite Blockiermittel (7) die ersten Blockiermittel (8) steuert, wenn der Erdungsstrom detektiert wird.

13. Vorrichtung gemäß einem der Ansprüche 10 bis 12, **dadurch gekennzeichnet, dass** das Detektionselement eine Schlagbolzen (19)-Sicherung (27) enthält, wobei der Schlagbolzen (19) der Sicherung (27) in der Lage ist, das Teil, das den Drücker (16) bildet, von der geschlossenen Stellung zu der offenen Stellung überzuleiten.

14. Vorrichtung gemäß einem der Ansprüche 3 bis 13, **dadurch gekennzeichnet, dass** die Trennmittel (6) jeweils ein Sicherheitselement (9) aufweisen, das zwischen einer Phase und dem ersten jeweiligen Blockiermittel angebracht ist und das als Funktion hat, das elektrische Gerät gegen einen mehrphasigen Ausfall zu schützen.

15. Vorrichtung gemäß Anspruch 14, **dadurch gekennzeichnet, dass** jedes der Sicherheitselemente eine Schlagbolzen(19)-Sicherung (9) aufweist, wobei der Schlagbolzen (19) in der Lage ist, das Teil, das den Drücker (16) des ersten jeweiligen Blockiermittels bildet, von der geschlossenen Stellung zu der offenen Stellung überzuschieben.

16. Vorrichtung gemäß einem der Ansprüche 3 bis 18, **dadurch gekennzeichnet, dass** die Trennmittel (6) in ein Gehäuse (20) eingebaut sind, das in seinem oberen Teil (21) isoliert und dicht ist, wobei das Gehäuse (20) die Funktion hat, die Isolierung der Trennmittel (6) aufrechtzuerhalten.

17. Vorrichtung gemäß einem der Ansprüche 1 bis 6, **dadurch gekennzeichnet, dass** das elektrische Gerät ein Transformator zum Verteilen von elektrischer Energie mittlerer Spannung ist.
